Europäisches Patentamt

European Patent Office

Office européen des brevets

(19)

(11) Veröffentlichungsnummer: **0 072 365**
**B1**

(12) # EUROPÄISCHE PATENTSCHRIFT

(45) Veröffentlichungstag der Patentschrift:
**29.01.86**

(21) Anmeldenummer: **82890109.0**

(22) Anmeldetag: **02.08.82**

(51) Int. Cl.⁴: **A 22 C 17/04**

(54) **Vorrichtung zum Abtrennen des an Knochen anhaftenden Fleisches von diesen Knochen.**

(30) Priorität: **04.08.81 AT 3442/81**

(43) Veröffentlichungstag der Anmeldung:
**16.02.83 Patentblatt 83/7**

(45) Bekanntmachung des Hinweises auf die Patenterteilung:
**29.01.86 Patentblatt 86/5**

(84) Benannte Vertragsstaaten:
**BE CH DE FR GB IT LI LU NL SE**

(56) Entgegenhaltungen:
**FR - A - 427 051**
**SU - A - 138 153**
**US - A - 4 025 985**

(73) Patentinhaber: **Inject Star Pökelmaschinen Gesellschaft m.b.H., Innstrasse 23-25, A-1200 Wien (AT)**

(72) Erfinder: **Prosenbauer, Otto, Innstrasse 23-25, A-1200 Wien (AT)**

(74) Vertreter: **Boeckmann, Peter, Dipl.-Ing. et al, Patentanwälte Dipl.-Ing. Peter Boeckmann, Dipl.-Ing. Leo Brauneiss Strohgasse 10, A-1030 Wien (AT)**

## Beschreibung

Die Erfindung bezieht sich auf eine Vorrichtung zum Abtrennen des an Knochen anhaftenden Fleisches von diesen Knochen, durch Verpressen der fleischbehafteten Knochen in einem Pressraum mit stehender Achse, in den von unten ein Presskolben einführbar ist, welcher Pressraum an seinem oberen Ende durch ein Widerlager für die Verpressung verschliessbar ist, wobei die Wand des Pressraumes Öffnungen für den Durchgang der durch den Pressdruck in pastenartigen Zustand übergeführten Fleischmasse hat, für die Knochen jedoch undurchlässig ist und wobei ein Füllraum für die auszupressende Fleisch-Knochen-Masse vorgesehen ist, der oberhalb des Pressraumes zwischen einer von der Pressraumachse entfernten Füllstellung und einer im Bereich der Pressraumachse liegenden Entleerstellung quer zur Pressraumachse verlagerbar ist, aus welchem Füllraum die auszupressende Masse nach Entfernung des Widerlagers in den Pressraum fällt.

Bei der bekannten Vorrichtung dieser Art sind oberhalb des Pressraumes übereinander zwei Ringe um gesonderte vertikale Achsen verschwenkbar gelagert. Wenn diese Ringe in eine mit der Pressraumachse koaxiale Lage gebracht sind, wird ein das Widerlager bildender Gegenkolben von oben in die beiden Ringe eingeführt, bis die untere Stirnfläche des Gegenkolbens den Pressraum am oberen Ende dicht abschliesst. Nach Auspressung der Fleisch-Knochen-Masse wird der Gegenkolben wieder angehoben und der Presskolben so weit nach oben verschoben, dass die Knochenrückstandsmasse in den unteren Ring eingeschoben wird. Dieser Ring wird sodann um seine Achse verschwenkt, so dass die Knochenrückstandsmasse aus dem Bereich des Pressraumes seitlich auf eine Auflage geschoben wird und nach Verlassen derselben nach unten aus dem Ring herausfällt. Zugleich wird der den Füllraum bildende obere Ring in die Füllstellung gebracht, dort mit auszupressender Fleisch-Knochen-Masse gefüllt, die am Herausfallen aus dem Ring durch eine Platte gehindert wird, auf der der Ring gleitet. Sodann wird dieser Ring um seine Schwenkachse wieder in die zur Pressraumachse koaxiale Entleerstellung gebracht, wobei der Ring von der Platte abgleitet, so dass die in ihm enthaltenen fleischbehafteten Knochen durch den anderen Ring in den Pressraum hineinfallen, in welchem zuvor der Presskolben wieder zurückgezogen wurde. Sobald beide Ringe wieder die zur Pressraumachse koaxiale Lage erreicht haben, beginnt durch Absenkung des Gegenkolbens der Arbeitszyklus von neuem. Die bei der Auspressung durch die Öffnungen der Pressraumwand austretende pastöse Fleischmasse wird aufgefangen und der weiteren Verwertung zugeführt.

Nachteilig an dieser bekannten Vorrichtung ist der hohe konstruktive und platzmässige Aufwand sowie der erhöhte Aufwand für die Steuerung der beiden schwenkbaren Ringe und für die axiale Bewegung des Gegenkolbens. Ferner neigt die bekannte Vorrichtung zu Störungen durch Brückenbildung der zu verpressenden Masse beim Hineinfallen in den Pressraum. Es ist Aufgabe der Erfindung, diese Nachteile zu vermeiden und eine Vorrichtung der eingangs geschilderten Art so zu verbessern, dass die Vorrichtung wesentlich vereinfacht sowie betriebssicherer und kompakter wird. Die Erfindung geht aus von einer Vorrichtung der eingangs geschilderten Art und löst diese Aufgabe dadurch, dass das Widerlager in der gleichen Horizontalebene wie der Füllraum quer zur Pressraumachse verlagerbar ist, wobei der Füllraum in seiner Entleerstellung unmittelbar an den Pressraum anschliesst. Auf diese Weise bewegen sich Widerlager und Füllraum in der gleichen Ebene, wodurch nur zwei quer zur Pressraumachse gerichtete Bewegungen für das Widerlager und den Füllraum erforderlich sind, hingegen die Bewegung eines das Widerlager bildenden Gegenkolbens in axialer Richtung des Pressraumes eingespart wird. Ausserdem wird der Vorteil erzielt, dass die Fallhöhe beim Hineinfallen der auszupressenden Masse aus dem Füllraum in den Pressraum verringert wird, so dass die Gefahr von Brückenbildungen bzw. Verklemmungen der Knochen herabgesetzt ist. Die Auswerfbewegung für die ausgepresste Knochenmasse kann nach Wahl entweder vom herangeführten Füllraum oder vom Widerlager bei dessen Wegführung von der Pressraumachse übernommen werden.

Gemäss einer Weiterbildung der Erfindung sind das Widerlager und der Füllraum entlang einer gemeinsamen geraden Führung normal zur Achse des Pressraumes verschiebbar, wobei der Füllraum und das Widerlager starr miteinander verbunden sind. Durch die gerade Führung wird der Aufwand gegenüber der Schwenklagerung nach der eingangs beschriebenen bekannten Vorrichtung weiter vereinfacht und die Vorrichtung von Kippmomenten entlastet. Wenn gemäss einer bevorzugten Ausführung der Erfindung ein gemeinsamer Antrieb für die Verschiebung des Widerlagers und des mit ihm starr verbundenen Füllraumes vorhanden ist, reduziert sich der Aufwand für die Bewegung der beweglichen Bauteile noch weiter auf nur einen zum Presskolbenantrieb zusätzlichen Antrieb.

Gemäss einer bevorzugten Bauweise der Erfindung sind das Widerlager und der Füllraum von zwei, vorzugsweise gleich grossen, Hohlzylindern gebildet, wobei der das Widerlager bildende Hohlzylinder an seiner unteren Stirnfläche eine starre Bodenwand hat, wogegen der auf einer an das obere Stirnende des Pressraumes seitlich anschliessenden Auflagekplatte gleitende, den Füllraum begrenzende Hohlzylinder unten offen ist. Diese Auflageplatte verhindert, dass die auszupressende Masse aus dem Füllzylinder herausfällt, bevor dieser seine zum Presszylinder koaxiale Lage erreicht hat.

Zur Erleichterung der Auswerfung des verpressten Knochenpaketes ist gemäss einer Weiterbildung der Erfindung die Anordnung so getroffen, dass die beiden Hohlzylinder um zumindest den Innendurchmesser des Pressraumes voneinander in Abstand gehalten sind, wobei am unteren Ende des den Füllraum bildenden Hohlzylinders an der dem anderen Hohlzylinder zugewendeten Seite ein Auswerfkragen angeordnet ist. Dieser Auswerfkragen hat die Aufgabe, das verpresste Knochenpaket bei der Einbringung des Füllzylinders in seine zur Pressraumachse koaxiale Lage vor sich herzuschieben, zweckmässig zu einer Rutsche, über die das verpresste Knochenpaket in einen Behälter fällt.

Die Anordnung könnte so getroffen sein, dass die Unterkante des Widerlagers sowie des Füllzylinders jeweils bündig mit der Oberkante des Pressraumes bzw. dessen Wand abschliessen. Dies würde aber Dichtungsprobleme mit sich bringen und es ist daher im Rahmen der Erfindung günstiger, wenn in der den Pressraum abschliessenden Stellung des Widerlagers die Pressraumwand in dichtende Anlage an das Widerlager anhebbar ist. Zur Durchführung dieser Anhebung kann ein gesonderter, vom hydraulisch betätigten Presskolben unabhängig hydraulisch betätigter Kolben vorhanden sein, dessen Kolbenstange mit einer die Pressraumwand tragenden, den Presskolben umschliessenden Ringplatte verbunden ist.

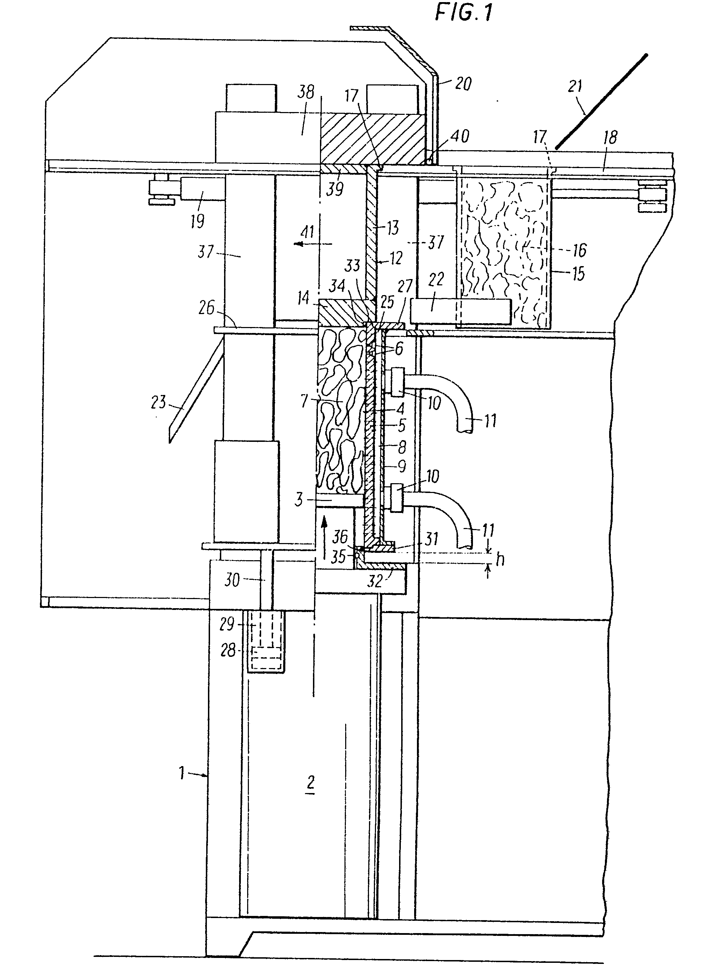

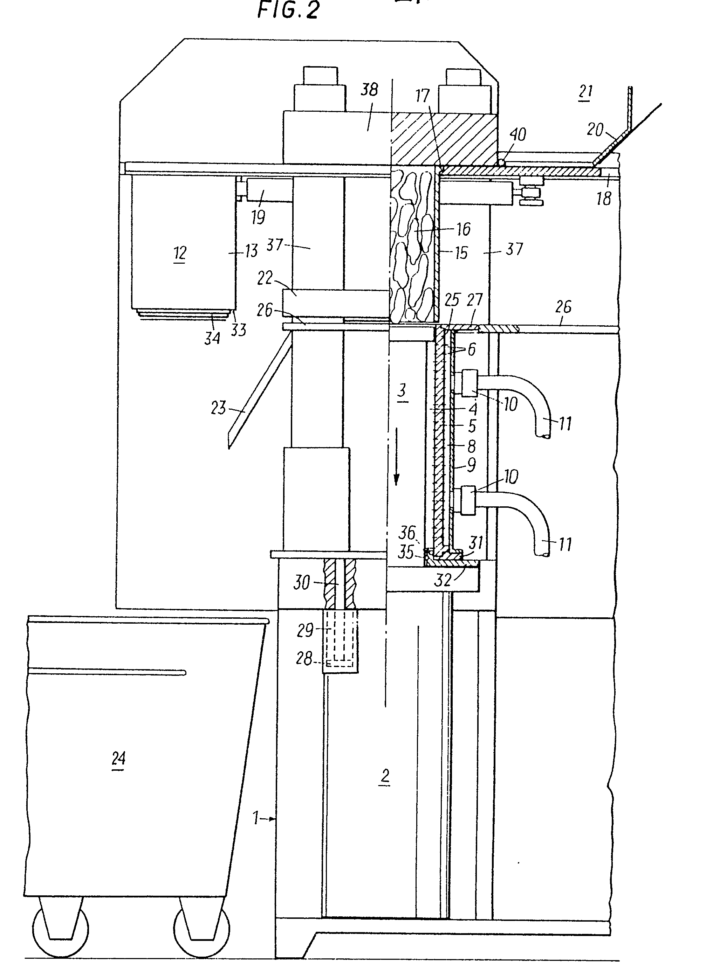

In der Zeichnung ist die erfindungsgemässe Vorrichtung an Hand eines Ausführungsbeispieles in zwei voneinander verschiedenen Betriebsstellungen schematisch veranschaulicht. Fig. 1 zeigt in der rechten Hälfte einen Vertikalschnitt durch die Vorrichtung, in der linken Hälfte eine Ansicht derselben, mit dem Füllraum in der Füllstellung, wogegen Fig. 2 die gleiche Vorrichtung mit dem Füllraum in der Entleerstellung zeigt.

Die Vorrichtung hat ein Gestell 1, in welchem ein hydraulischer Zylinder 2 mit vertikaler Achse befestigt ist. In diesem Zylinder 2 ist ein Presskolben 3 verschiebbar, der in einen Pressraum 4 mit vertikaler Achse von unten eintritt. Die im Querschnitt kreisringförmige Wand 5 des Pressraumes 4 hat eine Vielzahl kleiner Öffnungen 6, von denen der Einfachheit halber nur zwei dargestellt sind. Diese Öffnungen 6 lassen die durch den Druck des Presskolbens 3 im Pressraum 4 in den pastenartigen Zustand übergeführten Fleischanteile der Fleisch-Knochen-Masse 7 hindurch, halten jedoch die Knochen zurück. Die in den pastenartigen Zustand übergeführte Fleischmasse wird in einem Ringraum 8 zwischen dem Aussenmantel der Wand 5 und einem Rohr 9 gesammelt und durch den Rohrmantel durchsetzende Anschlüsse 10, an die Schläuche 11 angeschlossen sind, abgeführt.

Bei der Verpressung bildet ein Widerlager 12 die nötige Abstützung für die Pressmasse. Dieses Widerlager 12 ist von einem Hohlzylinder 13 und einer diesen unten abschliessenden starren Bodenwand 14 gebildet.

Seitlich neben dem Widerlager 12 ist ein weiterer Hohlzylinder 15 angeordnet, der von einem oben und unten offenen Rohr gebildet ist, das mit seinem Innenraum einen Füllraum 16 für die zu verpressenden fleischbehafteten Knochen bildet. Die beiden Hohlzylinder 13, 15 sind so weit voneinander entfernt, dass der zwischen ihren Aussenmantelflächen verbleibende lichte Abstand zumindest so gross ist wie der Innendurchmesser des Pressraumes 4. Beide Hohlzylinder 13, 15 sind an ihren oberen Rändern mit seitlichen Flanschen 17 in geradlinigen Führungen 18 zu beiden Seiten geführt und entlang dieser Führungen 18 durch hydraulische Zylinder 19 verschiebbar, wobei die Hohlzylinder 13, 15 an den nicht dargestellten Kolbenstangen dieser Zylinder 19 in fixem Abstand voneinander befestigt sind. Mittels dieser Zylinder 19 können die Hohlzylinder 13, 15 wechselweise mit ihren Achsen in koaxialer Lage zum Pressraum 4 gebracht werden. Auf diese Weise kann der den Füllraum 16 begrenzende Hohlzylinder 15 zwischen der in Fig. 1 dargestellten Füllstellung, in welcher er unterhalb eines durch einen Deckel 20 verschliessbaren Einfülltrichters 21 liegt, und der in Fig. 2 dargestellten Entleerstellung, in der der Hohlzylinder 15 mit der Achse des Pressraumes 4 fluchtet, hin und her verschoben werden. In analoger Weise ist der Hohlzylinder 13 aus der in Fig. 1 dargestellten Stellung, in der er das Widerlager bei der Verpressung der Pressmasse bildet, in die in Fig. 2 dargestellte unwirksame, von der Achse des Pressraumes 4 entfernte Stellung verschiebbar. An seiner dem Hohlzylinder 13 zugewendeten Seite trägt der Hohlzylinder 15 einen Auswerfkragen 22, der von einem gebogenen Blech gebildet ist, dessen beide Enden am Hohlzylinder 15 befestigt sind und dessen Mittelteil entsprechend dem Radius des Pressraumes 4 gebogen ist. Dieser Auswerfkragen 22 erfasst bei der Verschiebung des Hohlzylinders 15 das vom Presskolben 3 aus dem Pressraum 4 nach oben herausgeschobene verpresste Knochenpaket und schiebt dieses vor sich her, bis dieses Knochenpaket über eine Rutsche 23 in einen Knochenauffangwagen 24 fällt. Um zu vermeiden, dass die in den Füllraum 16 aus dem Einfülltrichter 21 eingebrachte, zu verpressende Masse nach unten herausfällt, bevor der Hohlzylinder 15 in koaxiale Lage mit dem Pressraum 4 gebracht wird, ist eine an das obere Stirnende 25 des Pressraumes 4 seitlich anschliessende Auflageplatte 26 vorgesehen, die von der Wand 5 des Pressraumes 4 bis zumindest unter den Einfülltrichter 21 reicht. Auf der anderen Seite des Pressraumes 4 setzt sich diese Auflageplatte 26 fort und dient dort als Auflage für das durch den Auswerfkragen 22 verschobene Knochenpaket. Auf dieser Auflageplatte 26 ist eine die Wand 5 umgebende Ringpartie 27 ausgeschnitten, die an der Wand 5 und an dem Rohr 9 befestigt ist und zusammen mit diesen Bauteilen durch einen hydraulisch betätigten Kolben (28) anhebbar ist, der in einem am Gestell 1 befestigten Hydralikzylinder 29 geführt ist und dessen Kolbenstange 30 an einer die Wand 5 tragenden, den Presskolben 3 umschliessenden Ringplatte 31 befestigt ist. Diese Ringplatte 31 ist um den Hub h (Fig. 1) aus der in Fig. 2 dargestellten unteren Grenzlage, in der die Ringplatte 31 auf der oberen Stirnwand 32 des Zylinders 2 aufliegt, in die in Fig. 1 dargestellte Lage anhebbar. Dadurch kann das obere Stirnende 25 der Wand 5 in dichtende Anlage an die Bodenwand 14 des Widerlagers 12 gedrückt werden, wobei zur Verbesserung dieser Dichtwirkung die Bodenwand 14 an ihrem Aussenmantel eine ringsum laufende Aussparung 33 hat, in der ein O-Ring 34 liegt. Am unteren Ende des Pressraumes 4 erfolgt die Abdichtung durch einen in die Stirnwand 32 eingesetzten O-Ring 35, der diese Stirnwand gegenüber dem Presskolben 3 abdichtet, sowie durch einen O-Ring 36, der in einen Bodenflansch der Wand 5 eingesetzt ist und am Innenmantel des Rohres 9 anliegt.

Der bei der Verpressung vom Widerlager 12 aufgenommene Pressdruck wird über den Hohlzylinder 13 auf ein an Säulen 37 des Gestelles befestigtes Querhaupt 38 übertragen. Zur Versteifung kann in das obere Ende des Hohlzylinders 13 eine Abschlussplatte 39 eingesetzt sein.

Die Funktion der Vorrichtung ist wie folgt: Die zu verpressenden fleischbehafteten Knochen werden bei der in Fig. 1 dargestellten Lage des Füllraumes 16 in den Einfülltrichter 21 eingeworfen und fallen in den Hohlzylinder 15 hinein. Sobald der Füllraum 16 gefüllt ist, wird der Deckel 20 geschlossen, wobei seine Schliesslage durch einen Endschalter 40 überwacht wird, der in den elektrischen Schaltkreis für die hydraulischen Antriebe derart eingeschaltet ist, dass die hydraulischen Antriebe erst bei geschlossenem Deckel 20 in Gang versetzt werden können. Während der Füllraum 16 gefüllt wird, wird durch den druckbeaufschlagten Presskolben 3 die im Pressraum 4 befindliche Pressmasse verpresst, wobei die in den pastenartigen Zustand übergeführten Fleischanteile durch die Öffnung 6 in den Ringspalt 8 austreten und über die Schläuche 11 der weiteren Verwendung zugeleitet werden. Das Widerlager 12 liefert den nötigen Gegendruck bei der Verpressung. Sobald die Verpressung beendet ist, wird der Kolben 3 druckentlastet und durch entsprechende Steuerung des Hydraulikzylinders 29 die Ringplatte 31 samt der von ihr getragenen Wand 5 abgesenkt. Dadurch wird das untere Stirnende der Bodenwand 14 des Hohlzylinders 13 frei, so dass dieser aus seiner mit der Achse des Pressraumes 4 fluchtenden Lage in Richtung des Pfeiles 41 gegen die Rutsche 23 zu bewegt werden kann, so dass das obere Ende des Pressraumes 4 freigegeben wird. Zugleich wird der Hohlzylinder 15 um das gleiche Stück in Richtung des Pfeiles 41 nach links verschoben. Sobald das obere Stirnende des Pressraumes 4 freigelegt ist, wird der Presskolben 3 angehoben, so dass die paketförmige Knochenrückstandsmasse aus dem Pressraum 4 nach oben ausgeschoben wird. Sobald die Rückstandsmasse vollkommen aus dem Pressraum 4 ausgeschoben ist, werden die beiden Hohlzylinder 13, 15 durch entsprechende Steuerung des Zylinders 19 weiter nach links (Fig. 1) in Richtung des Pfeiles 41 verschoben, bis sie die in Fig. 2 dargestellte Endlage erreicht haben. Hiebei wird das Knochenrückstandpaket durch den Auswerfkragen 22 auf der Auflageplatte 26 in Richtung des Pfeiles 41 verschoben und fällt über die Rutsche 23 in den Knochenauffangwagen 24. Sobald der Hohlzylinder 15 die mit der Achse des Pressraumes 4 fluchtende Lage erreicht hat, wird der Presskolben 3 wieder abgesenkt, wobei die im Füllraum 16 enthaltene, zu verpressende fleischbehaftete Knochenmasse in den Pressraum 4 fällt. Hierauf werden die beiden Hohlzylinder 13, 15 wieder in die in Fig. 1 dargestellte Stellung zurückgeführt und der Hydraulikzylinder 20 druckbeaufschlagt, so dass der Pressraum 4 oben wieder gegen das Widerlager 12 abgedichtet wird. Ein neuer Arbeitszyklus kann nun durch Druckbeaufschlagung des Presskolbens 3 und Öffnen des Deckels 20 sowie Füllen des Füllraumes 16 beginnen.

Zur Reinigung des Pressraumes 4 werden zunächst die beiden Hohlzylinder 13, 15 von ihren Antriebsstangen gelöst und ausgebaut. Hierauf wird mittels des Hydraulikzylinders 29 die Ringplatte 31 angehoben, was bis über das in Fig. 1 dargestellte Hubmass h möglich ist, da nunmehr kein Widerlager mehr entgegenwirkt. Sobald die Wand 5 soweit angehoben ist, dass ihr Unterrand den Oberrand des Presskolbens 3 passiert hat, kann die Wand 5 samt dem Rohr 9 seitlich ausgeschwenkt werden. Hiezu ist zweckmässig die Wand 5 samt dem Rohr 9 an einem nicht dargestellten Schwenkarm befestigt, der um eine der Säulen 37 in einer horizontalen Ebene schwenkbar ist.

**Patentansprüche**

1. Vorrichtung zum Abtrennen des an Knochen anhaftenden Fleisches von diesen Knochen, durch Verpressen der fleischbehafteten Knochen (7) in einem Pressraum (4) mit stehender Achse, in den von unten ein Presskolben (3) einführbar ist, welcher Pressraum (4) an seinem oberen Ende (25) durch ein Widerlager (12) für die Verpressung verschliessbar ist, wobei die Wand (5) des Pressraumes (4) Öffnungen (6) für den Durchgang der durch den Pressdruck in pastenartigen Zustand übergeführten Fleischmasse hat, für die Knochen jedoch undurchlässig ist und wobei ein Füllraum (16) für die auszupressende Fleisch-Knochen-Masse vorgesehen ist, der oberhalb des Pressraumes (4) zwischen einer von der Pressraumachse entfernten Füllstellung und einer im Bereich der Pressraumachse liegenden Entleerstellung quer zur Pressraumachse verlagerbar ist, aus welchem Füllraum (16) die auszupressende Masse nach Entfernung des Widerlagers (12) in den Pressraum (4) fällt, dadurch gekennzeichnet, dass das Widerlager (12) in der gleichen Horizontalebene wie der Füllraum (16) quer zur Achse des Pressraumes (4) verlagerbar ist, wobei der Füllraum (16) in seiner Entleerstellung unmittelbar an den Pressraum (4) anschliesst.

2. Vorrichtung nach Anspruch 1, dadurch gekennzeichnet, dass das Widerlager (12) und der Füllraum (16) entlang einer gemeinsamen geraden Führung (18) normal zur Achse des Pressraumes (4) verschiebbar sind, wobei der Füllraum (16) und das Widerlager (12) starr miteinander verbunden sind.

3. Vorrichtung nach Anspruch 2, dadurch gekennzeichnet, dass für die Verschiebung des Widerlagers (12) und des Füllraumes (16) ein gemeinsamer Antrieb (19) vorgesehen ist.

4. Vorrichtung nach Anspruch 2 oder 3, dadurch gekennzeichnet, dass das Widerlager (12) und der Füllraum (16) von zwei Hohlzylindern (13, 15) gebildet sind, wobei der das Widerlager (12) bildende Hohlzylinder (13) an seiner unteren Stirnfläche eine starre Bodenwand (14) hat, wogegen der auf einer an das obere Stirnende des Pressraumes (4) seitlich anschliessenden Auflageplatte (26) gleitende, den Füllraum (16) begrenzende Hohlzylinder (15) unten offen ist.

5. Vorrichtung nach Anspruch 4, dadurch gekennzeichnet, dass die beiden Hohlzylinder (13, 15) gleich gross sind.

6. Vorrichtung nach Anspruch 4, dadurch gekennzeichnet, dass die beiden Hohlzylinder (13, 15 um zumindest den Innendurchmesser des Pressraumes (4) voneinander in Abstand gehalten sind, wobei am unteren Ende des den Füllraum (16) begrenzenden Hohlzylinders (15) ein Auswerfkragen (22) an der dem anderen Hohlzylinder (13) zugewendeten Seite angeordnet ist.

7. Vorrichtung nach Anspruch 4, 5 oder 6, dadurch gekennzeichnet, dass die beiden Hohlzylinder (13, 15) an ihren oberen Rändern an seitlichen Führungen (17) geführt sind, wobei der das Widerlager (12) bildende Hohlzylinder (13) in seiner zum Pressraum (4) koaxialen Lage an einem Querhaupt (38) des Gestelles (1) anliegt.

8. Vorrichtung nach einem der Ansprüche 1 bis 7, dadurch gekennzeichnet, dass in der den Pressraum (4) abschliessenden Stellung des Widerlagers (12) die Wand (5) des Pressraumes (4) in dichtende Anlage an das Widerlager (12) anhebbar ist.

9. Vorrichtung nach Anspruch 8, dadurch gekennzeichnet, dass zur Anhebung der Wand (5) des Pressraumes (4) ein gesonderter, vom hydraulisch betätigbaren Presskolben (3) unabhängiger, hydraulisch betätigter Kolben (28) vorhanden ist, dessen Kolbenstange (30) mit einer die Wand (5) des Pressraumes (4) tragenden, den Presskolben (3) umschliessenden Ringplatte (31) verbunden ist.

## Revendications

1. Dispositif destiné à séparer la chair adhérant à des os, de ces os, par compression des os entourés de chair (7), dans une enceinte de compression (4) à axe vertical, dans laquelle peut être introduit, par le bas, un piston de compression (3), l'enceinte de compression pouvant être fermée, à son extrémité supérieur (25), par un élément de réaction (12) servant à la compression, la paroi (5) de l'enceinte de compression (4) possédant des ouvertures (6) permettant le passage de la chair transformée en masse pâteuse par la compression, mais que les os ne peuvent pas traverser, une chambre de remplissage (16) étant prévue pour la masse viande/os à comprimer, pouvant être déplacée, au-dessus de l'enceinte de compression (4), entre une position de remplissage à une certaine distance de l'axe de l'enceinte de compression, et une position de déchargement située dans la zone de l'axe de l'enceinte de compression, dans le sens transversal par rapport à l'axe de l'enceinte de compression, la masse à comprimer tombant, après enlèvement de l'élément de réaction (12), de cette chambre de remplissage (16) dans l'enceinte de compression (4), caractérisé en ce que l'élément de réaction (12) est déplaçable dans le plan horizontal dans lequel est situé la chambre de remplissage (16), dans le sens transversal par rapport à l'axe de l'enceinte de compression (4), la chambre de remplissage (16) étant immédiatement contiguë à l'enceinte de compression (4), lorsqu'elle se trouve en position de déchargement.

2. Dispositif suivant la revendication 1, caractérisé en ce que l'élément de réaction (16) et la chambre de remplissage (16) sont déplaçables normalement à l'axe de l'enceinte de compression (4), le long d'un guidage (18) commun, la chambre de remplissage (16) et l'élément de réaction (12) étant reliés de façon rigide.

3. Dispositif suivant la revendication 2, caractérisé en ce que pour le déplacement de l'élément de réaction (12) et de la chambre de remplissage (16), une commande (19) commune est prévue.

4. Dispositif suivant une des revendications 2 ou 3, caractérisé en ce que l'élément de réaction (12) et la chambre de remplissage (16) sont constitués de deux cylindres creux (13, 15), le cylindre creux (13) formant l'élément de réaction (12) possédant, sur sa face inférieure, une plaque de fond (14) rigide, le cylindre creux (15 limitant la chambre de remplissage (16) et glissant sur une plaque d'appui (26) contiguë latéralement à l'extrémité supérieure de la chambre de compression (4), possédant un fond ouvert.

5. Dispositif suivant la revendication 4, caractérisé en ce que les deux cylindres creux (13, 15) possèdent les mêmes dimensions.

6. Dispositif suivant la revendication 4, caractérisé en ce que les deux cylindres creux (13, 15) ont une distance entre eux au moins égale au diamètre intérieur de l'enceinte de compression (4), une collerette d'éjection (22) étant montée à l'extrémité inférieure du cylindre creux (15) limitant la chambre de remplissage (16), en face de l'autre cylindre creux (13).

7. Dispositif suivant une des revendications 4, 5 ou 6, caractérisé en ce que les deux cylindres creux (13, 15) sont guidés, sur leurs bords supérieurs, sur des guidages (17) latéraux, le cylindre creux (13) formant l'élément de réaction (12) s'appuyant, dans sa position coaxiale par rapport à l'enceinte de compression (4), sur une traverse (38) du châssis (1).

8. Dispositif suivant une des revendications 1 à 7, caractérisé en ce que dans la position de fermeture de l'enceinte de compression (4) de l'élément de réaction (12), la paroi (5) de l'enceinte de compression (4) est relevable pour plaquer de façon étanche contre l'élément de réaction (12).

9. Dispositif suivant la revendication 8, caractérisé en ce que, pour faire monter la paroi (5) de l'enceinte de compression (4) on a prévu un piston (28) séparé à commande hydraulique, indépendant du piston de compression (3) pouvant être commandé hydrauliquement, dont la tige (30) du piston est reliée à un anneau plat (31) supportant la paroi (5) de l'enceinte de compression (4) et entourant le piston de compression (3).

## Claims

1. Apparatus for separating meat adhearing to bones from these bones by compressing the bones (7) and the meat adhearing thereto within a press chamber (4) having an upright axis, into which press chamber a press piston (3) can be introduced from below, which press chamber (4) can be closed on its upper end (25) by an abutment (12) for the compression, the wall (5) of the press chamber (4) having openings (6) for the passage of the meat mass being brought into a pasty condition by the pressing pressure, whereas said wall is impermeable for the bones, a filling chamber (16) for the meat-bone-mass to be compressed being provided, which filling chamber can be moved above the press chamber (4) transversely to the axis of the press chamber between a filling position remote from the axis of the press chamber and a discharging position in the region of the axis of the press chamber, from which filling chamber (16) the mass to be compressed falls into the press chamber (4) after removal of the abutment (12), characterized in that the abutment (12) can be moved in the same horizontal plane as the filling chamber (16) transversely to the axis of the press chamber (4), the filling chamber (16) in its discharging position joining the press chamber (4) directly.

2. Apparatus according to claim 1, characterized in that the abutment (12) and the filling chamber (16) can be shifted perpendicularly to the axis of the press chamber (4) along a common straight guide (18), the filling chamber (16) and the abutment (12) being rigidly connected to each other.

3. Apparatus according to claim 2, characterized in that for shifting of the abutment (12) and of the filling chamber (16) a common drive means (19) is provided.

4. Apparatus according to claim 2 or 3, characterized in that the abutment (12) and the filling chamber (16) are constituted by two hollow cylinders (13, 15), the hollow cylinder (13) constituting the abutment (12) having a rigid bottom wall (14) on its lower front surface, whereas the hollow cylinder (15) confining the filling chamber (16) and sliding on a support plate (26) joining laterally to the upper front end of the press chamber (4), is open at below.

5. Apparatus according to claim 4, characterized in that the two hollow cylinders (13, 15) are equal in size.

6. Apparatus as claimed in claim 4, characterized in that the two hollow cylinders (13, 15) are spaced apart from each other for at least the inner diameter of the press chamber (4), an ejecting collar (22) being provided at the lowe end of the hollow cylinder 15) limiting the filling chamber (16) at its side facing the other hollow cylinder (13).

7. Apparatus according to claim 4, 5 or 6, characterized in that the two hollow cylinders (13, 15) are guided on their upper edges along laterally guides (17), the hollow cylinder (13) constituting the abutment (12) contacting a cross bar (38) of the frame (1) when the hollow cylinder is in a coaxial position with respect to the press chamber (4).

8. Apparatus according to any one of the claims 1 to 7, characterized in that in that position of the abutment (12) in which it closes the press chamber (4), the wall (5) of the press chamber (4) can be lifted into tight engagement to the abutment (12).

9. Apparatus according to claim 8, characterized in that for lifting the wall (5) of the press chamber (4) a separate, hydraulically actuated piston (28) is provided which is independent from the hydraulically actuated press piston (3) and has its piston rod (30) connected to an annular plate (31) supporting the wall (5) of the press chamber (4) and surrounding the press piston (3).

-1/2-

FIG.1

-2/2-

FIG.2